(19) Europäisches Patentamt

European Patent Office

Office européen des brevets

(11) Veröffentlichungsnummer: **0 563 720 A1**

(12) **EUROPÄISCHE PATENTANMELDUNG**

(21) Anmeldenummer: **93104617.1**

(22) Anmeldetag: **20.03.93**

(51) Int. Cl.5: **C22C 19/05**, C22C 19/03

(30) Priorität: **02.04.92 DE 4210997**

(43) Veröffentlichungstag der Anmeldung:
**06.10.93 Patentblatt 93/40**

(84) Benannte Vertragsstaaten:
**AT BE CH DE DK ES FR GB IE IT LI LU NL SE**

(71) Anmelder: **Krupp VDM GmbH**
**Plettenberger Strasse 2**
**D-58791 Werdohl(DE)**

(72) Erfinder: **Köhler, Michael, Dr. Ing.**
**Oestricher Strasse 173**
**W-5860 Iserlohn(DE)**
Erfinder: **Heubner, Ulrich, Dr. Ing.**
**Borgheller Strasse 28**
**W-5980 Werdohl(DE)**
Erfinder: **Büth, Jürgen Dr. rer. nat.**
**Freih.v.Stein-Strasse 5**
**W-5990 Altena(DE)**

(74) Vertreter: **Cohausz & Florack Patentanwälte**
**Postfach 14 01 61**
**Schumannstrasse 97**
**D-40237 Düsseldorf (DE)**

(54) **Austenitische Nickel-Molybdän-Legierung.**

(57) Die Erfindung betrifft eine austenitische Nickel-Molybdän-Legierung mit hervorragender Korrosionsbeständigkeit in reduzierenden Medien und einer ausgezeichneten thermischen Stabilität im Temperaturbereich zwischen 650 und 950°C, gekennzeichnet durch die Zusammensetzung (% Massengehalt):

| | |
|---|---|
| Molybdän | 26,0 bis 30,0 % |
| Eisen | 1,0 bis 7,0 % |
| Chrom | 0,4 bis 1,5 % |
| Mangan | bis 1,5 % |
| Silicium | bis 0,05 % |
| Kobalt | bis 2,5 % |
| Phosphor | bis 0,04 % |
| Schwefel | bis 0,01 % |
| Aluminium | 0,1 bis 0,5 % |
| Magnesium | bis 0,1 % |
| Kupfer | bis 1,0 % |
| Kohlenstoff | bis 0,01 % |
| Stickstoff | bis 0,01 % |

Rest Nickel und übliche erschmelzungsbedingten Verunreinigungen, wobei die Summe der Gehalte an interstitiell gelösten Elementen (Kohlenstoff + Stickstoff) auf maximal 0,015 % beschränkt und die Summe der Elemente (Aluminium + Magnesium) in den Grenzen 0,15 bis 0,40 % eingestellt ist.

Sie eignet sich besonders als Werkstoff für Bauteile von Chemie-Anlagen, die eine besondere Beständigkeit gegenüber reduzierenden Medien wie Salzsäure, gasförmiger Chlorwasserstoffen, Schwefelsäure, Essigsäure und Phosphorsäure erfordern.

EP 0 563 720 A1

Die Erfindung betrifft eine austenitische Nickel-Molybdän-Legierung mit einer ausgezeichneten Gefügestabilität im Temperaturintervall von 650 bis 950°C und ihre Verwendung für Bauteile, die eine hohe Korrosionsbeständigkeit insbesondere gegen Salzsäure in weiten Konzentrations- und Temperaturbereichen, in Schwefelsäure und in anderen reduzierenden Medien besitzen müssen.

Metallisches Molybdän ist auch bei höheren Temperaturen ungewöhnlich beständig gegenüber der Korrosion durch sogenannte reduzierende Medien wie Salzsäure, Schwefelsäure und Phosphorsäure. Obwohl wissenschaftlich nicht korrekt, hat sich die Bezeichnung reduzierend für solche korrosive Medien eingebürgert, in denen das Wasserstoffion das alleinige Oxidationsmittel darstellt. Dies führte zur Entwicklung von Nickel-Molybdän-Legierungen, die aufgrund des relativ hohen Molybdän-Gehaltes eine gute Beständigkeit in reduzierenden Lösungen aufweisen (W. Z. Friend, Corrosion of Nickel and Nickel-Base Alloys, John Wiley & Sons, New York-Chichester-Brisbane-Toronto, 1980, S. 248-291). Ihre gute Beständigkeit in reduzierenden Säuren beruht dabei auf der niedrigen Korrosionsgeschwindigkeit im aktiven Zustand, die durch das Legierungselement Molybdän bewirkt wird. So konnten bereits Uhlig u. Mitarbeiter (J. Electrochem. Soc. Vol. 110, (1963) 650) anhand von anodischer Polarisation in 0,01 N Schwefelsäure bei 25°C zeigen, daß in Nickel-Molybdän-Legierungen mit Molybdängehalten ≧ 15 % das Korrosionspotential stark abnimmt. Noch deutlicher zeigt sich der positive Einfluß des Molybdäns in Nickel-Molybdän-Legierungen bei der Prüfung in Salzsäure. Flint (Metallurgica, Vol. 62 (373), 195 November 1960) berichtete über die Aufnahme von galvanostatischen anodischen Polarisationskurven in unbelüfteter 5%iger Salzsäure (30°C) und zeigte, daß bis zu einer Zugabe von 20 % Molybdän die relativ stärkste Verbesserung zu verzeichnen war, aber auch Gehalte bis zu 30 % Molybdän verschoben das Korrosionspotential weiter in Richtung auf die edlere Seite.

Die bekannten Nickel-Molybdän-Legierungen NiMo30 und NiMo28 gemäß Tabelle 1 resultierten aus den Bemühungen, Werkstoffe mit einer sehr guten Beständigkeit unter reduzierenden Bedingungen zu entwickeln. Üblicherweise werden diese Legierungen im lösungsgeglühten und abgeschreckten Zustand geliefert, um ein Maximum an Korrosionsbeständigkeit zu gewährleisten. Es zeigte sich aber, daß im geschweißten Zustand insbesondere die Legierung NiMo30 für interkristalline Korrosion in der Wärme-Einfluß-Zone anfällig war. Die Legierungsoptimierung in Hinblick auf die Elemente Kohlenstoff und Silizium führten in den 70er Jahren zu einer Verbesserung der Schweißbarkeit (F. G. Hodge u .a., Materials Performance, Vol. 15 (1976) 40-45). Gleichzeitig wurde der Eisengehalt auf möglichst niedrige Gehalte eingeschränkt, um die Ausscheidungsgeschwindigkeit für Karbide zu reduzieren (Svistunova, "Molybdenum in Nickel-Base Corrosion-Resistant Alloys", Soviet-American Symposium, Moskau, 17-18. Januar 1973). Verarbeitungsprobleme bei der Fertigung großer Komponenten für den Chemie-Apparatebau konnten Jedoch nicht ausgeräumt werden, da der Werkstoff zur Warmrißbildung neigt.

Der Erfindung liegt die Aufgabe zugrunde, eine korrosionsbeständige und schweißbare Nickel-Molybdän-Legierung zu schaffen, die bei durchzuführenden Wärmebehandlungen und beim Schweißen nicht zu übermäßigem Duktilitätsverlust oder sogar zur Warmrißbildung neigt.

Gelöst wird diese Aufgabe durch eine austenitische Nickel-Molybdän-Legierung, bestehend aus (in % Massengehalt):

| Molybdän | 26,0 bis 30,0 % |
|---|---|
| Eisen | 1,0 bis 7,0 % |
| Chrom | 0,4 bis 1,5 % |
| Mangan | bis 1,5 % |
| Silicium | bis 0,05 % |
| Kobalt | bis 2,5 % |
| Phosphor | bis 0,04 % |
| Schwefel | bis 0,01 % |
| Aluminium | 0,1 bis 0,5 % |
| Magnesium | bis 0,1 % |
| Kupfer | bis 1,0 % |
| Kohlenstoff | bis 0,01 % |
| Stickstoff | bis 0,01 % |

Rest Nickel und üblichen erschmelzungsbedingten Verunreinigungen, wobei die Summe der Gehalte an interstitiell gelösten Elementen (Kohlenstoff + Stickstoff) auf maximal 0,015 9% beschränkt und die Summe der Elemente (Aluminium + Magnesium) in den Grenzen 0,15 bis 0,40 % eingestellt ist.

Vergleicht man die erfindungsgemäße Legierung mit dem in Tabelle 1 in Form der Legierungen NiMo30 und NiMo28 wiedergegebenen Stand der Technik, so wird deutlich, daß sich die erfindungsgemäße Legierung vom Stand der Technik durch ihre Gehalte von 0,1 bis 0,5 % Aluminium und bis zu 0,1 % Magnesium abhebt, die beide in der Summe auf 0,15 bis 0,40 % eingestellt sein müssen. Es hat sich herausgestellt, daß es damit möglich ist, den Kohlenstoffgehalt gegenüber dem vorbekannten Stand der Technik zu halbieren, nämlich von bisher max. 0,02 % auf erfindungsgemäß max. 0,01 %. Damit kann die gemäß früherer Lehre erforderliche Einschränkung des Eisengehaltes auf max. 2,0 %, wie sie in der heute üblichen Legierung NiMo28 praktiziert wurde, entfallen. Das ergibt sich daraus, daß die Neigung zur Karbidausscheidung schon alleine durch den geringen Kohlenstoffgehalt nun so gering ist, daß ihre Beschleunigung durch gleichzeitig vorhandenes Eisen gemäß früherer Lehre unerheblich wird. Die obere Grenze von 7,0 % für den Eisengehalt war in der Legierung NiMo30 wegen sich sonst zu stark vermindernder Korrosionsbeständigkeit eingeführt worden. Sie wird auch für die erfindungsgemäße Legierung vorgesehen. Darüber hinaus wird für die erfindungsgemäße Legierung eine untere Begrenzung des Eisengehalts auf mindestens 1,0 % eingeführt. Damit läßt sich eine so weitgehende Verzögerung des sonst bei thermischer Beanspruchung im Chemie-Apparatebau, beispielsweise beim Schweißen eintretenden Duktilitätsverlustes, erreichen, daß die bei diesem Werkstoff gefürchtete Rißbildung praktisch vermieden werden kann.

Dies wird für die erfindungsgemäße Legierung nachfolgend anhand von Versuchsergebnissen erläutert. Die 3 Ausführungsbeispiele der erfindungsgemäßen Legierung A, B und c in Tabelle 1 wurden zu Blechen von 12 mm Dicke gewalzt, lösungsgeglüht und anschließend in Wasser abgeschreckt. Sodann wurde ihre thermische Stabilität durch eine Auslagerung von 0,1 bis 8 h Dauer im Temperaturbereich zwischen 650 und 950 ° C durch Prüfung der Kerbschlagarbeit an ISO-V-Proben ermittelt und der thermischen Stabilität einer dem Stand der Technik entsprechenden NiMo28 Legierung gegenübergestellt. Diese dem Stand der Technik entsprechende NiMo28-Legierung hatte mit nur 0,11 % einen Eisengehalt von weniger als 1 %, während die 3 Ausführungsbeispiele der erfindungsgemäßen Legierung sich gemäß Tabelle 2 durch Eisengehalte von 1,13 %, 1,75 % und 5,86 % aufweisen.

Die Ergebnisse sind in Tabelle 2 wiedergegeben. Greift man dort beispielhaft den Einfluß einer Auslagerung bei 700 ° C heraus, so erkennt man, daß die dem Stand der Technik entsprechende Legierung NiMo28 nach 0,1 h eine Kerbschlagarbeit von 225 Joule aufweist, die mit zunehmender Auslagerungszeit auf 38 Joule nach 8 h abfällt. Demgegenüber liegt die erfindungsgemäße Legierung A nach 0,1 h bei 700 ° C mit > 300 Joule deutlich höher, sie liegt selbst nach 1stündiger Auslagerungszeit mit 179 Joule noch weit über der dem Stand der Technik entsprechenden Legierung NiMo28 und fällt erst nach 8 h auf etwas niedrigere Werte ab als jene dort ausweist. Eine gegenüber dem Stand der Technik ähnlich verzögerte Duktilitätsabnahme gilt für die erfindungsgemäße Legierung B, und insbesondere für Legierung C mit einem Fe-Gehalt von 5,86 %.

Noch deutlich wird der Vorteil der erfindungsgemäßem Legierung, wenn man beispielhaft den Einfluß einer Auslagerung bei 800 ° C betrachtet. Hier liegt die Kerbschlagarbeit der dem Stand der Technik entsprechenden Legierung NiMo28 schon nach 0,1 h bei nur 35 Joule, während die Ausführungsbeispiele A und B der erfindungsgemäßen Legierung noch über 200 Joule liegen. Mit fortschreitender Auslagerungszeit fällt die Kerbschlagarbeit der dem Stand der Technik entsprechenden Legierung NiMo28 auf nur 13 Joule nach 8 h ab, während die Ausführungsbeispiele A, b und C der erfindungsgemäßen Legierung dort immer noch bei rd. 150 Joule liegen.

Ergänzend wurden nach einstündiger Auslagerung bei 700 ° C die mechanischen Kenwerte im Zugversuch ermittelt und in Tabelle 3 wiedergegeben. Man erkennt dort, daß das Ausführungsbeispiel B der erfindungsgemäßen Legierung auch nach einer derartigen thermischen Beanspruchung noch eine Bruchdehnung $A_5$ von 24 % und eine Brucheinschnürung Z von 26 % aufweist. Gleich gute Ergebnisse weist die Legierung C auf.

Die Korrosionsbeständigkeit der erfindungsgemäßen Legierung C wurde im Vergleich zu der dem Stand der Technik entsprechenden Legierung NiMo28 geprüft. Als Prüfmedium dienten Salzsäurelösungen, wie sie für die Nickel-Molybdän-Legierungen üblicherweise zur Anwendung kommen, um ihre Tauglichkeit für den praktischen Einsatz zu testen. Für die erfindungsgemäße Legierung wurde dabei das Ausführungsbeispiel C mit dem hohen Eisengehalt von 5,86 % gewählt. Die Ergebnisse sind in Tabelle 4 wiedergegeben. Man erkennt, daß bei Prüfung auf interkristalline Korrosion (IK) gemäß dem Verfahren nach Stahl-Eisen-Prüfblatt (SEP) 1877, Verfahren III, die erfindungsgemäße Legierung keine interkristalline Korrosion (IK) erkennen läßt. Im Fall der Prüfung nach DuPont-Spezifikation SW 800 M ist der Korrosionsabtrag der erfindungsgemäßen Legierung geringer als der Korrosionsabtrag, welcher mit der Legierung NiMo28 maximal erzielt werden darf. Auch bei der Prüfung an geschweißten Bolzen gemäß der ebenfalls für die Nickel-Molybdän-Legierungen häufig geforderten Lummus-Spezifikation liegt die erfindungsgemäße Legierung selbst bei dem hohen Eisengehalt des Ausführungsbeispiels C von 5,86 % gut im üblicherweise erwarteten Rahmen. In Verbindung mit dem geringen Duktilitätsverlust bei thermischer Beanspruchung kann die erfindungsgemäße Legierung damit auch für geschweißte Bauteile ohne Wärmenachbehandlung Anwendung finden.

Demnach stehen mit der erfindungsgemäßen Legierung in Hinblick auf die thermische Stabilität zu erzielenden Vorteile keine Nachteile in Hinblick auf die Korrosionsbeständigkeit gegenüber. Die Korrosionsbeständigkeit der erfindungsgemäßen Legierung ist bei Anwendung der hier üblicherweise anzuwendenden Testmedien vielmehr ausgezeichnet.

Der Chromgehalt der erfindungsgemäßen Legierung liegt bei 0,4 bis 1,5 %, da Chromgehalte dieser Höhe gleichfalls den Duktilitätsverlust der Legierung bei thermischer Beanspruchung vermindern.

Die Zusätze an Aluminium und Magnesium in der erfindungsgemäßen Höhe dienen zur Desoxidation der erfindungsgemäßen Legierung und ermöglichen es, den in Nickel-Basis-Legierungen allgemein als schädlich bekannten Gehalt an Schwefel durch wirksame Entschwefelungsmaßnahmen unter reduzierenden Bedingungen gegenüber dem Stand der Technik von bisher max. 0,03 auf max. 0,01 % weiter zu erniedrigen. Auch der Gehalt des in Nickel-Basis-Legierungen bekanntermaßen die Karbidausscheidungen beschleunigenden Siliziums kann bei Zugabe von Aluminium und Magnesium von bisher max. 0,1 auf erfindungsgemäß max. 0,05 % erniedrigt werden. Um die Warmumformbarkeit zu verbessern, wird über die Einschränkung des Kohlenstoffgehalts hinausgehend auch der Stickstoffgehalt auf max. 0,01 % und die Summe an Kohlenstoff plus Stickstoff auf max. 0,015 % beschränkt.

Die Elemente Kobalt, Mangan, Kupfer und Phosphor beeinflussen in den angegebenen Höchstgrenzen die guten Werkstoffeigenschaften der erfindungsgemäßen Legierung nicht. Diese Elemente können bei der Erschmelzung über die Einsatzstoffe eingebracht werden.

Die erfindungsgemäße Legierung zeichnet sich durch gute Schweißbarkeit und Korrosionsbeständigkeit aus. Sie besitzt eine ausgezeichnete Gefügestabilität im Temperaturintervall von 650 bis 950 °C und eignet sich für den Apparatebau auch aus dickwandigen geschweißten Bauteilen in der Chemie.

**Tabelle 1 :** Beispiele für die chemische Zusammensetzung erfindungsgemäßer Legierungen im Vergleich zu den Legierungen NiMo30 und NiMo28 nach dem Stand der Technik. Alle Angaben in % Massengehalt.

| | Mo | Ni | Fe | Cr | Mn | Si | Co | P | S | Al | Mg | Cu | C | N | V |
|---|---|---|---|---|---|---|---|---|---|---|---|---|---|---|---|
| NiMo30 * | 26–30 | Rest | 4,0–7,0 | $\leq$ 1,0 | $\leq$ 1,0 | $\leq$ 1,0 | $\leq$ 2,5 | $\leq$ 0,04 | $\leq$ 0,03 | – | – | $\leq$ 0,50 | $\leq$ 0,05 | – | 0,2-0, |
| NiMo28 ** | 26–30 | Rest | $\leq$ 2,0 | $\leq$ 1,0 | $\leq$ 1,0 | $\leq$ 0,10 | $\leq$ 1,0 | $\leq$ 0,04 | $\leq$ 0,03 | – | – | – | $\leq$ 0,02 | – | – |
| Legierung A + | 27,6 | Rest | 1,13 | 0,47 | 0,42 | 0,01 | 0,05 | 0,003 | 0,002 | 0,30 | 0,012 | 0,03 | 0,003 | 0,003 | – |
| Legierung B + | 26,6 | Rest | 1,75 | 0,68 | 0,68 | 0,01 | 0,05 | 0,002 | 0,002 | 0,24 | 0,005 | 0,02 | 0,003 | 0,004 | – |
| Legierung C + | 27,0 | Rest | 5,86 | 0,71 | 0,60 | 0,03 | 0,10 | 0,010 | 0,001 | 0,28 | 0,011 | 0,13 | 0,006 | 0,005 | – |

\*)    Deutsche Werkstoff-No. 2.4810, UNS N 10001, Sollanalyse

\*\*)    Deutsche Werkstoff-No. 2.4617, UNS N 10665, Sollanalyse

+)    Erfindungsgemäße Legierungen, Ist-Analysen

EP 0 563 720 A1

Tabelle 2

| Der Einfluß von Auslagerungszeit und Auslagerungstemperatur auf die Kerbschlagarbeit (ISO-V-Proben) der in Tabelle 1 dargestellten Legierungen | | | | | | | | |
|---|---|---|---|---|---|---|---|---|
| Legierung | Zeit h | 650 °C | 700 °C | 750 °C | 800 °C | 850 °C | 900 °C | 950 °C |
| NiMo28 |  | 212 | 225 | 69 | 35 | 79 | 175 | 188 |
| A | 0,1 | >300 | >300 | >300 | 274 | 256 | 243 | 236 |
| B |  | 247 | 233 | 213 | 203 | 203 | 212 | 210 |
| C |  | 211 | 201 | 184 | 173 | 160 | 151 | 154 |
| NiMo28 |  | 250 | 189 | 49 | 18 | 67 | 195 | 177 |
| A | 0,2 | >300 | >300 | 252 | 258 | 239 | 231 | 238 |
| B |  | 234 | 227 | 208 | 218 | 205 | 207 | 210 |
| C |  | 206 | 186 | 186 | 168 | 156 | 150 | 148 |
| NiMo28 |  | 226 | 125 | 31 | 17 | 71 | 188 | 155 |
| A | 0,5 | >300 | 270 | 179 | 238 | 229 | 218 | 221 |
| B |  | 237 | 207 | 240 | 205 | 212 | 196 | 200 |
| C |  | 208 | 188 | 167 | 157 | 150 | 145 | 148 |
| NiMo28 |  | 183 | 70 | 24 | 17 | 55 | 153 | 136 |
| A | 1 | >300 | 179 | 94 | 247 | 237 | 211 | 228 |
| B |  | 230 | 207 | 188 | 197 | 194 | 208 | 208 |
| C |  | 189 | 194 | 165 | 150 | 140 | 140 | 132 |
| NiMo28 |  | 70 | 38 | 9 | 13 | 20 | 30 | 40 |
| A | 8 | 176 | 27 | 28 | 200 | 199 | 210 | 210 |
| B |  | 72 | 35 | 193 | 201 | 198 | 197 | 213 |
| C |  | 155 | 143 | 140 | 147 | 111 | 102 | 94 |
| Legierungen A bis C erfindungsgemäß | | | | | | | | |

Tabelle 3

| Prüfung der Duktilität der erfindungsgemäßen Legierungen B und C im Warmzugversuch bei 700 °C nach einer vorausgegangenen Auslagerung über 1 h, im Vergleich zum Stand der Technik (NiMo28). | | | | | |
|---|---|---|---|---|---|
| Werkstoff nach Tabelle 1 | $R_{p0,2}$ N/mm$^2$ | $R_{p1,0}$ N/mm$^2$ | $R_m$ N/mm$^2$ | $A_5$ % | Z % |
| NiMo28 | 570 | n.b. | n.b. | 5 | 2 |
| Legierung B | 259 | 294 | 479 | 24 | 26 |
| Legierung C | 287 | 312 | 519 | 22 | 23 |

**Tabelle 4:**  Prüfung des Korrosionsverhaltens der erfindungsgemäßen
Legierung C im Vergleich zum Werkstoff NiMo28

1. Prüfung nach SEP 1877 Verfahren III
(10%ige Salzsäurelösung, 24 h, siedend)

| Werkstoff nach Tabelle 1 | IK-Angriff und IK > 50 μm |
|---|---|
| NiMo28 | kein IK |
| erfindungsgemäße Legierung C | kein IK |

2. Prüfung nach DuPont-Spezifikation SW 800 M
(20%ige Salzsäurelösung 24 h, siedend)

| Werkstoff nach Tabelle 1 | Massenverlust (Korrosionsrate) |
|---|---|
| NiMo28 | ≤ 0,020 inch/month (≙ 0,61 mm/a) |
| erfindungsgemäße Legierung C | 0,018 inch/month (≙ 0,55 mm/a) |

3. Prüfung nach Lummus-Spezifikation
(geschweißte Probe, 20%ige Salzsäure, 100 h bei 149°C in Autoklaven

| Werkstoff nach Tabelle 1 | IK-Angriff in WEZ | Massenverlust |
|---|---|---|
| NiMo28 | ≤ 175 μm | kein Grenzwert typ. 2-3 mm/a |
| erfindungsgemäße Legierung C | 90 μm | 2,8 mm/a |

**Patentansprüche**

1. Austenitische Nickel-Molybdän-Legierung mit hervorragender Korrosionsbeständigkeit in reduzierenden Medien und einer ausgezeichneten thermischen Stabilität im Temperaturbereich zwischen 650 und 950°C, gekennzeichnet durch die Zusammensetzung (% Massengehalt):

| Molybdän | 26,0 bis 30,0 % |
|---|---|
| Eisen | 1,0 bis 7,0 % |
| Chrom | 0,4 bis 1,5 % |
| Mangan | bis 1,5 % |
| Silicium | bis 0,05 % |
| Kobalt | bis 2,5 % |
| Phosphor | bis 0,04 % |
| Schwefel | bis 0,01 % |
| Aluminium | 0,1 bis 0,5 % |
| Magnesium | bis 0,1 % |
| Kupfer | bis 1,0 % |
| Kohlenstoff | bis 0,01 % |
| Stickstoff | bis 0,01 % |

Rest Nickel und übliche erschmelzungsbedingten Verunreinigungen, wobei die Summe der Gehalte an interstitiell gelösten Elementen (Kohlenstoff + Stickstoff) auf maximal 0,015 % beschränkt und die Summe der Elemente (Aluminium + Magnesium in den Grenzen 0,15 bis 0,40 % eingestellt ist.

2. Austenitische Nickel-Molybdän-Legierung gemäß Anspruch 1, dadurch gekennzeichnet; daß der Eisengehalt auf 2 bis 7% eingeschränkt ist.

3. Austenitische Nickel-Molybdän-Legierung gemäß Anspruch 1, dadurch gekennzeichnet, daß der Eisengehalt zwischen 2 % und 4 % liegt.

4. Austenitische Nickel-Molybdän-Legierung nach einem der Ansprüche 1 bis 3, dadurch gekennzeichnet, daß der Chromgehalt bei 1,0 bis 1,5 % liegt.

5. Verwendung einer Nickel-Molybdän-Legierung gemäß den Ansprüchen 1 bis 4 als Werkstoff für Bauteile von Chemie-Anlagen, die eine besondere Beständigkeit gegenüber reduzierenden Medien wie Salzsäure, gasförmigen Chlorwasserstoffen, Schwefelsäure, Essigsäure und Phosphorsäure erfordern.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 861 550 (YOSHIDA ET AL.) *Patentansprüche 1-7;"Table 1", nr.10, 34 ;Spalte 1,Zeilen 16-31 und 52-68; Spalte 2,"(c)Fe";Spalte 3 ,"(g) Unavoidable impurities"* | 1-5 | C22C19/05 C22C19/03 |
| A | US-A-2 109 285 (BROWN) * das ganze Dokument * | 1-5 | |
| A | DE-B-1 134 205 (INTERNATIONAL NICKEL COMPANY) * das ganze Dokument * | 1-5 | |
| A | & US-A-2 959 480 (FLINT) | 1-5 | |
| A | US-A-3 649 255 (ECER) *Patentansprüche 1,2; Spalte 1, Zeilen 4-26 ;Spalte 2, Zeilen 30-55 * | 1-5 | |
| A | SU-A-660 408 (SVISTOUNOVA ET AL.) * das ganze Dokument * | 1-4 | |

| RECHERCHIERTE SACHGEBIETE (Int. Cl.5) |
|---|
| C22C |

Der vorliegende Recherchenbericht wurde für alle Patentansprüche erstellt

| Recherchenort | Abschlußdatum der Recherche | Prüfer |
|---|---|---|
| DEN HAAG | 14 MAI 1993 | LIPPENS |